# EUROPEAN PATENT SPECIFICATION

(11) **EP 2 740 566 B1**
(45) Date of publication and mention of the grant of the patent: **20.05.2015**
(21) Application number: 13196112.0
(22) Date of filing: 06.12.2013
(51) Int. Cl.: B23P 23/02, B23P 23/04, B23Q 37/00, B23Q 39/02, B23B 23/00, B23P 25/00, H05B 6/14

(54) **Compound machine tool**
Kombiniertes Maschinenwerkzeug
Machine-outil combinée

(30) Priority: 07.12.2012 TW 101146097
(43) Date of publication of application: 11.06.2014
(73) Proprietor: YI-DA Precision Machinery Co., Ltd., 41146 Taichung City (TW)
(72) Inventor: Pu, Hank, 41146 Taichung City (TW)
(74) Representative: Jansen, Cornelis Marinus

(56) References cited:
- EP-A1- 0 827 807
- EP-A2- 2 388 093
- DE-B3-102011 003 004
- DE-U1-202010 002 818
- US-A- 2 706 234

## Description

The invention relates to a compound machine tool, more particularly to a compound machine tool that is able to provide a plurality of functions including heat treatment.

According to different applications, there are many machine tools in the industry, such as lathe machines, milling machines, grinding machines, etc. With the development of technology, the conventional machine tool is gradually replaced by a compound machine tool having a computer numerical control (CNC) - machine tool and capable of performing various functions. A compound machine tool according to the preamble of claim 1 is disclosed in EP 0 827 807 A1.

Heating treatment is an important step for a machining process to improve mechanical properties or cutting workability of a workpiece subjected to the machining process or to eliminate residual stress in the workpiece.

However, at present, there is still no machine tool with a heat treatment function. Whether the heat treatment is conducted before or after the machining procedure, an extra heat treatment device has to be installed. Moreover, current steps for moving a workpiece between a machine tool and a heat treatment device, such as a high-frequency induction heating device, consume quite a lot of time and labor, and hence are not economically efficient. As such, there is a need in the art to provide a compound machine tool that is capable of performing heat treatment on the workpiece.

Therefore, an object of the present invention is to provide a compound machine tool that can at least alleviate the aforesaid drawback of the prior art.

According to the present invention, a compound machine tool for machining a workpiece includesa base seat,a clamping unit that is mounted on the base seat and that includes a clamper for clamping a first end portion of the workpiece, and
a tailstock unit that includes a tailstock slidable on the base seat along an X-axis and spaced apart from the clamper, a rotating seat rotatably disposed on the tailstock and rotatableabout a Y-axis that is perpendicular to the X-axis, and an abutting assembly and a clamping assembly that are mounted on the rotating seat.

A shaft unit is slidable on the base seat and includes a shaft, and a machining member connected to said shaft. A heating unit includes a heating member disposed on the rotating seat and angularly spaced apart from the abutting assembly and the clamping assembly with respective to the Y-axis. One of the heating member, the abutting assembly and the clamping assembly is rotatable with the rotating seat to be aligned with the workpiece.

Other features and advantages of the present invention will become apparent in the following detailed description of the preferred embodiment with reference to the accompanying drawings, of which:
Figure 1 is a perspective view of the preferred embodiment of a compound machine tool according to the present invention;
Figure 2 is an enlarged perspective view of the preferred embodiment, illustrating how a replacement unit clamps a heating member;
Figure 3 is a front view of the preferred embodiment, illustrating a clamping assembly being exposed from a tailstock along a Z-axis;
Figure 4 is another front view of the preferred embodiment, illustrating an abutting assembly being exposed from a tailstock along the Z-axis;
Figure 5 is another perspective view of the preferred embodiment, illustrating how a heating member is moved to a position above a socket;
Figure 6 is a view similar to Figure 5, but illustrating how the replacement unit releases the heating member; and

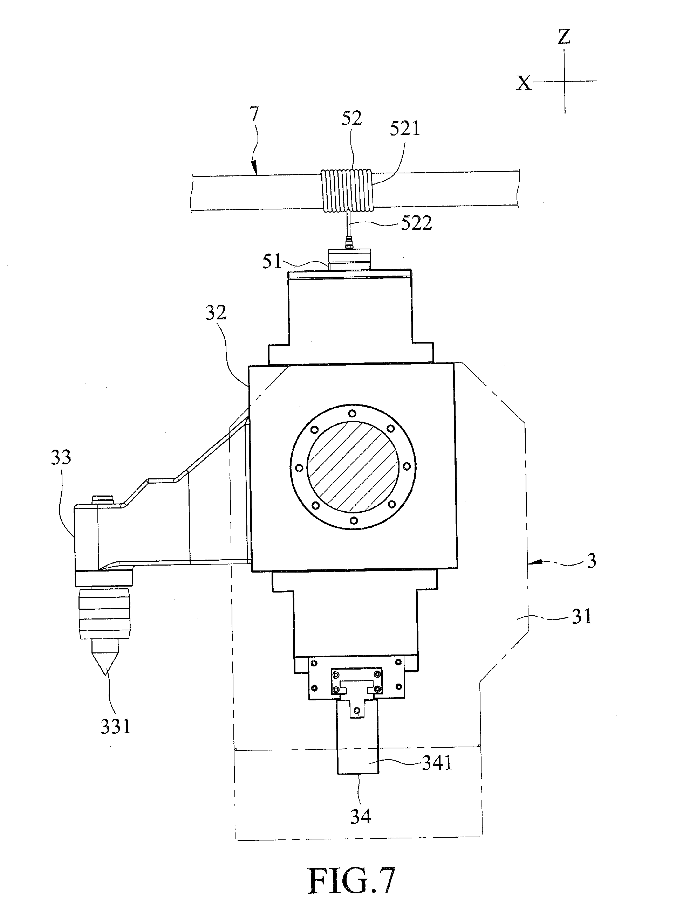

Figure 7 is still another front view of the preferred embodiment, illustrating how the heating member is engaged with a workpiece.

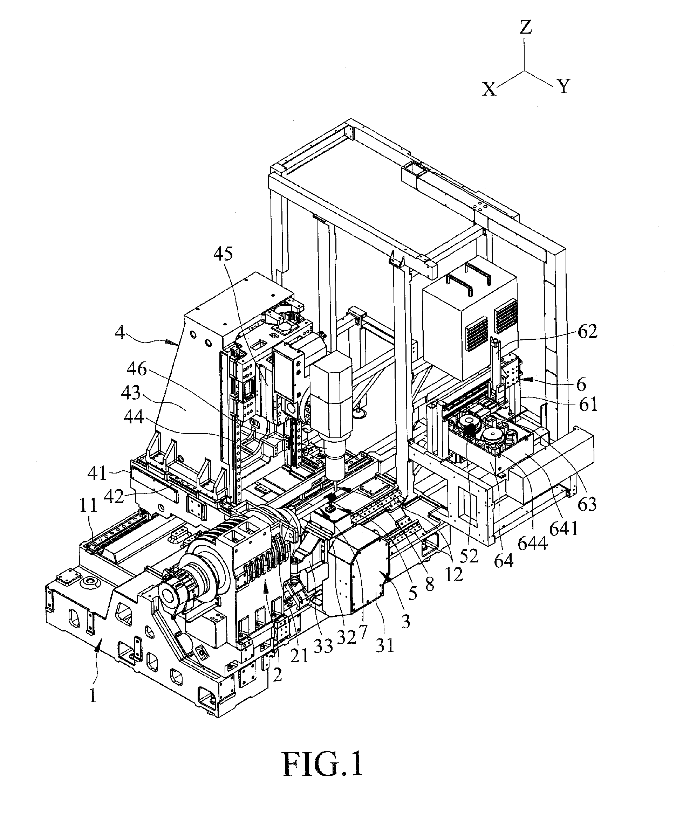

Referring to Figures 1 to 3, the preferred embodiment of a compound machine tool according to the present invention includes a base seat 1, a clamping unit 2, a tailstock unit 3, a shaft unit 4, a heating unit 5 and a replacement unit 6.

The base seat 1 includes a pair of first slide rails 11 and a pair of second slide rails 12 that are formed on top of the base seat 1 and that extend along an X-axis.

The clamping unit 2 is disposed on the base seat 1 aligned with the second slide rails 12 and proximate to one end thereof. The clamping unit 2 includes a chuck 21 for clamping a first end portion of a workpiece 7.

The tailstock unit 3 includes a tailstock 31 that is slidable on the base seat 1 and that is spaced apart from the chuck 21, an a rotating seat 32 that is rotatably disposed on the tailstock 31 and that is rotatable about a Y-axis which is perpendicular to the X-axis, and an abutting assembly 33 and a clamping assembly 34 that are mounted on the rotating seat 32. The abutting assembly 33 includes a needle 331 that abuts against a second end portion of the workpiece 7 along the X-axis. The clamping assembly 34 includes a pair of clampers 341 which are movable relative to each other along the Y-axis for clamping the workpiece 7.

The shaft unit 4 includes a slide seat 41 slidably engaged with the first slide rails 11, a pair of third slide rails 42 that is formed on the slide seat 41 and that extend along the Y-axis, a post 43 that is mounted on the slide seat 41 and that is slidably engaged with the third slide rails 42, a pair of fourth slide rails 44 that is mounted on one side of the post 43 and that extends along a Z-axis that is perpendicular to the X-axis and the Y-axis, a slide rack 45 slidably engaged with the fourth slide rails 44, and a spindle 46 that is mounted on the slide rack 45 and that is engageable with a machining member 8. The machining member 8 may be a milling cutter, a lathe tool, or a grinding wheel.

The heating unit 5 includes a socket 51 that is coupled to the rotating seat 32, and a plurality of heating members 52 (only one is shown), each of which is selectively inserted into the socket 51. In this embodiment, the heating members 52 are exemplified as induction heating members. The socket 51 is formed with a pair of insertion holes 511, and is angularly spaced apart from the abutting assembly 33 and the clamping assembly 34 with respective to the Y-axis. Each of the heating members 52 has an induction coil 521 that defines a through hole 520 for extension of the workpiece 7 therethrough and that is capable of generating high-frequency waves through an electromagnetic effect so as to heat the workpiece 7. Each heating member 52 further includes a pair of inserting pins 522 that are formed on a middle section of the induction coil 521, that are spaced apart from each other along the Y-axis and that are insertable into the respective insertion holes 511, . In this embodiment, the through holes 520 of the heating members 52 have different diameters. Alternatively, the heating members 52 may be other type of heating members, such as infrared heaters.

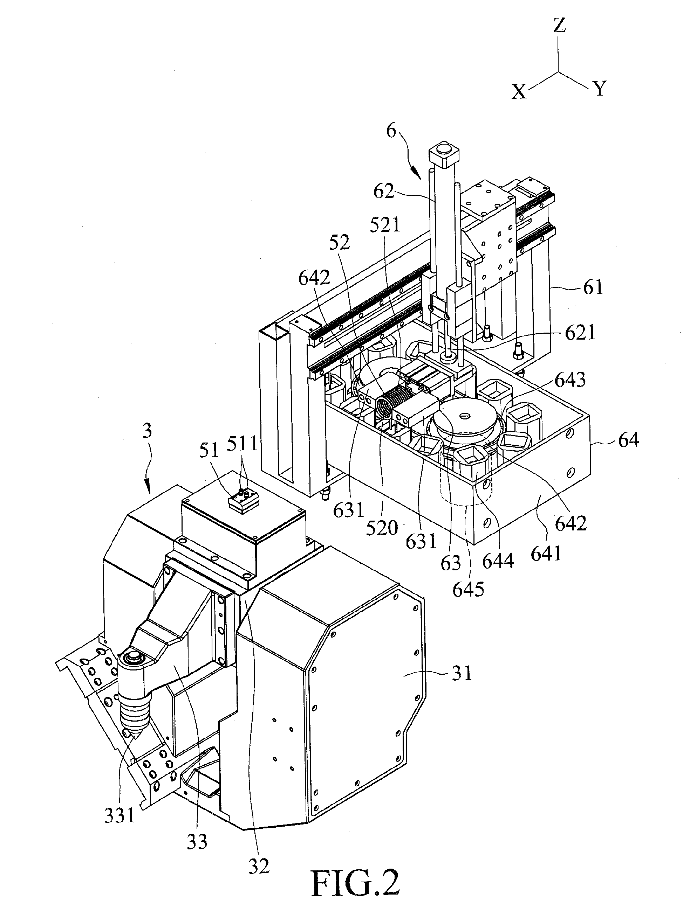

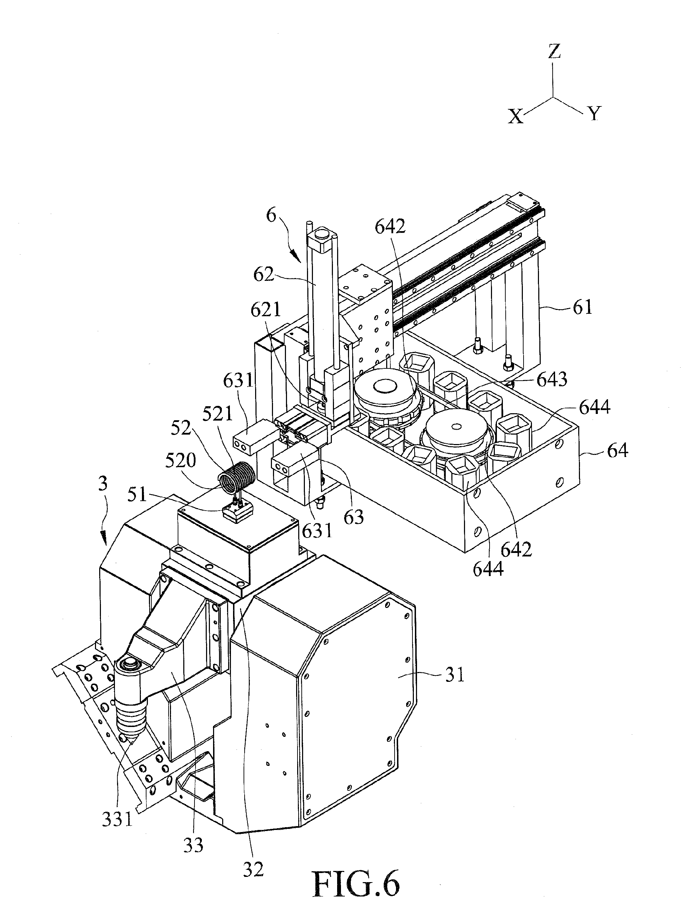

The replacement unit 6 includes a rail frame 61 that extends along the X-axis and that is disposed on a lateral side of the tailstock 31, a pressure cylinder unit 62 slidable on the rail frame 61, a clamping arm unit 63 and a tool receptacle 64 for accommodating the induction heat members 52. The pressure cylinder unit 62 has a piston rod 621 reciprocating along the Z-axis and forming a link with the clamping arm unit 63. The clamping arm unit 63 is movable along the rail frame 61 relative to the tailstock 31, and that is driven by the piston rod 621 of the pressure cylinder unit 62 to move between a first position (see Figure 2), where the clamping arm unit 63 clamps a selected one of the heating members 52, and a second position (see Figure 6), where the clamping armunit 63 releases the selected heatingmember 52. In this embodiment, the clamping arm unit 63 includes a pair of spaced-apart clamping arms 631 that are movable relative to each other so as to adjust a distance therebetween to clamp the selected heating member 52.

The tool receptacle 64 is disposed in a position corresponding to the first position of the clamping arm unit 63, and includes a case 641 having a top opening, a pair of driving gears 642 rotatably mounted in the case 641, a driven member 643 connected between the driving gears 642, a plurality of sleeves 644 that are connected to an outer surface of the driven member 643 and that form a link with the driven member 643, and a motor 645 for driving one of the driving gears 642. Each of the sleeves 644 receives a respective one of the heating members 52. In this embodiment, the driving gears 642 are configured as chain gears, and the driven member 643 is configured as a chain. It should be noted that, in order to simplify the illustration, only one sleeve 644 received in the respective heating member 52 is shown in Figure 1. In the actual application, all of the sleeves 644 respectively receive the heating members 52 having different specifications.

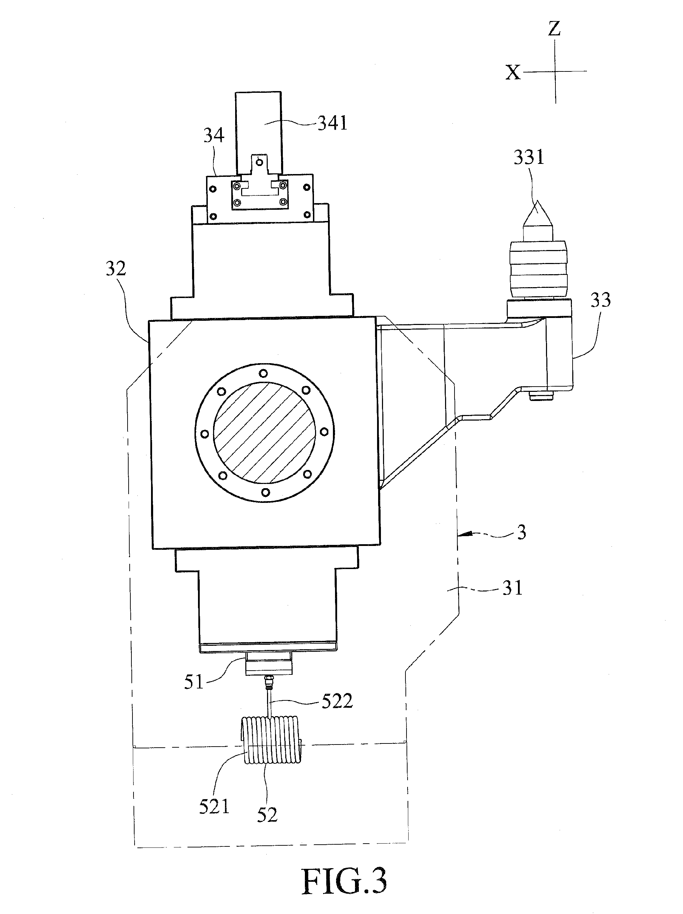

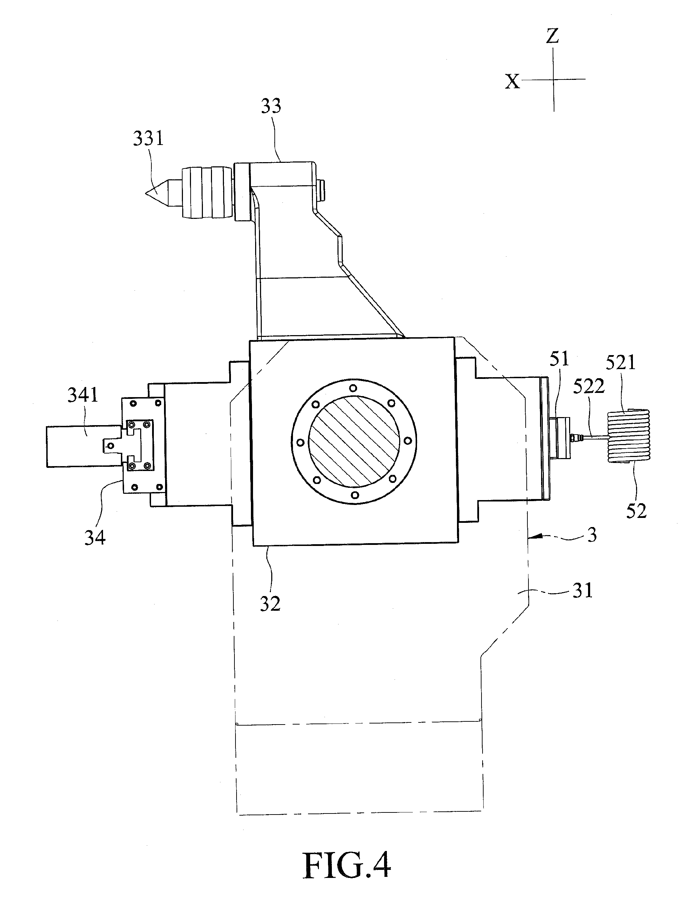

Referring to Figures 3 and 4, in combination with Figure 1, when the rotating seat 32 is rotated to a position where the abutting assembly 33 is exposedfrom the tailstock unit 31 and is aligned with the workpiece 7, the needle 331 can then be driven to move along the X-axis to abut against and support a workpiece 7 having a smaller diameter or a longer length. Further, the clampers 341 can clamp an irregular shaped workpiece 7, and rotate with the rotating seat 32 so as to be exposed from the tailstock 31 along the Z-axis or to be exposed from the tailstock 31 along the X-axis. Through this, the workpiece 7 can be turned about 90 degrees so that different surfaces of the workpiece 7 can face the machining member 8, thereby achieving the purpose of switching surfaces for processing.

As shown in the foregoing, through the slidable engagement between the slide seat 41 and the first slide rails 11, between the post 43 and the third slide rails 42, and between the slide rack 45 and the fourth slide rails 44, the spindle 46 can drive the machining member 8 to performa lathing, milling or grinding operation upon the workpiece 7 along the X-axis, the Y-axis or the Z-axis.

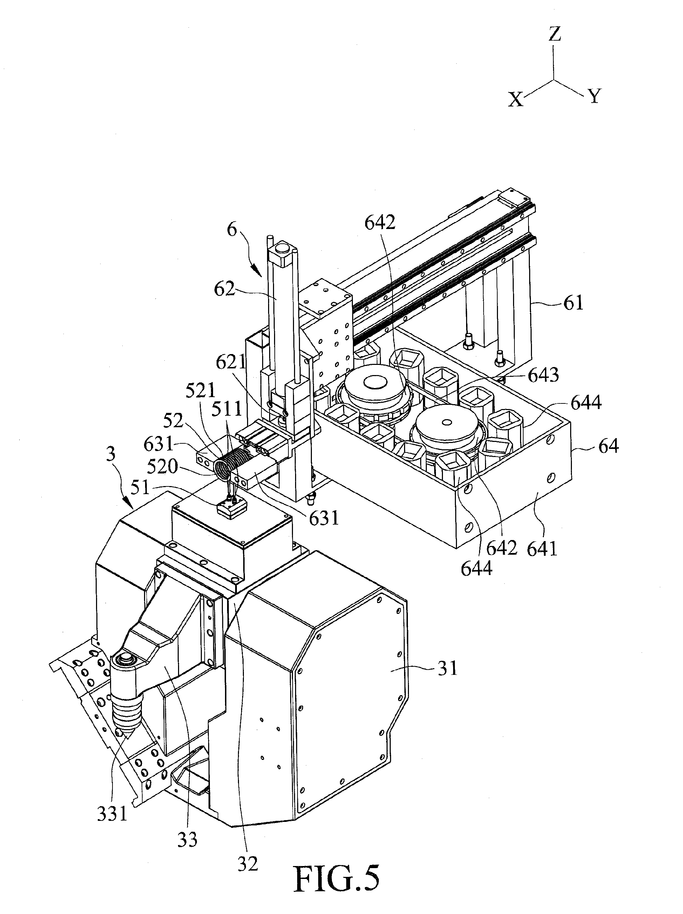

With ref erence to Figures 2, 5 and 6, in this embodiment, whether the high-frequency induction heating treatment is conducted before or after the machining procedure, the high-frequency induction heating treatment procedure can be accomplished by first driving the tailstock 31 to move close to the replacement unit 6, , and driving the rotating seat 32 to rotate until the socket 51 is exposed from the tailstock along the Z-axis and aligned with the workpiece 7. The pressure cylinder unit 62 together with the clamping arm unit 63 is then driven to move on the rail frame 61 along the X-axis. The clamping arm unit 63 is driven by the piston rod 621 to move along the Z-axis to the first position so as to clamp the induction coil 521 of a selected induction heating member 52 with the clamping arms 631, after which the clamping arm unit 63 is driven to move along the X-axis toward and above the socket 5 so as to align the inserting pins 522 of the induction heating member 52 with the respective insertion holes 511. Finally, the clamping arm unit 63 is driven to move downward along the Z-axis until the inserting pins 522 is inserted into the respective insertion holes 511, thereby electrically connecting the induction heating member 52 with the socket 51. The clamping arm unit 63 is then driven to move to the second position to release clamping of the induction heating member 52 by the clamping arms 631.

Further referring to Figure 6, during the high-frequency induction heating treatment, the workpiece 7 is simply inserted through the through hole 520 of the induction coil 521 of the heating member 52 so that the workpiece 7 is surrounded by the induction heating member 52, and is adjusted until the portion of the workpiece 7 to be heated is aligned with the induction coil 521. The portion of the workpiece 7 can then be heated in an induced electric field formed by the induction coil 521 through the electromagnetic effect.

Referring back to Figures 2, 5 and 6, similarly, to change the induction heating member 52, the tailstock 31 is driven to move close to the replacement unit 6, after which the clamping arm unit 63 is driven to clamp the induction heating member 52 with the clamping arms 631 and remove the same from the socket 51. Then, the clamping arm unit 63 is driven to move to a position above the tool receptacle 64 so as to align the induction heating member 52 with an empty one of the sleeves 644. Next, the clamping arm unit 63 is driven to move downward along the Z-axis until the inserting pins 522 are inserted into the empty sleeve 644. Finally, the clamping arm unit 63 is driven to release the induction heating member 52 and is then moved upward along the Z-axis for a next cycle. In the next cycle, the driving gears 642 rotate the sleeves 644 until a selected one of the induction heating members 52 is aligned with the clamping arm unit 63. The aforementioned inserting and releasing operations of the induction heating member 52 with the socket 51 can be repeated to achieve the purpose of replacing the induction heating member 52 for heating different sizes of workpieces 7.

The advantage of this invention resides in that, by combining the tailstock unit 3 with the heating unit 5, the compound machine tool of this invention is capable of performing the tasks for pressing and holding the workpiece 7, clamping the workpiece 7 and heating the workpiece 7. Hence, there is no need to mount other devices in this invention so that the spatial efficiency thereof can be increased. Further, a lot of time and labor for displacements of workpieces 7 of different sizes can also be saved so that the economical efficiency thereof is enhanced. As such, the convenience and practicality in use of this invention for complicated processing procedures is significantly increased.

## Claims

1. A compound machine tool for machining a workpiece (7), comprising:
a base seat (1);
a clamping unit (2) that is mounted on said base seat (1) and that includes a chuck (21) for clamping a first end portion of the workpiece (7);
a tailstock unit (3) including a tailstock (31) slidable on said base seat (1) along an X-axis and spaced apart from said chuck (21), a rotating seat (32) rotatably disposed on said tailstock (31) and rotatable about a Y-axis that is perpendicular to the X-axis, and an abutting assembly (33) and a clamping assembly (34) that are mounted on said rotating seat (32);
a shaft unit (4) that is slidable on said base seat (1) and that includes a shaft (42), and a machining member (8) connected to said shaft (42); and **characterized by** further comprising
a heating unit (5) that includes a heating member (52) disposed on said rotating seat (32) and angularly spaced apart from said abutting assembly (33) and said clamping assembly (34) with respective to the Y-axis, one of said heating member (52), said abutting assembly (31) and said clamping assembly (34) being rotatable with said rotating seat (32) to be aligned with the workpiece (7).

2. The compound machine tool of Claim 1, **characterized in that** said machining member (8) is selected from one of a milling cutter, a lathe tool, and a grinding wheel.

3. The compound machine tool of Claim 1, **characterized in that** said clamping unit (2) includes a pair of clampers (341) that are movable relative to each other so as to adjust a distance therebetween along the Y-axis for clamping the workpiece (7), and said abutting assembly (31) includes an abutting member (331) for abutting against and holding a second end portion of the workpiece (7) along the X-axis.

4. The compound machine tool of Claim 1, **characterized in that** said heating member (52) defines a through hole (520) for extension of the workpiece (7) therethrough.

5. The compound machine tool of Claim 4, **characterized in that** said heating unit (5) further includes a socket (51) coupled to said rotating seat (32), said heating member (52) being insertable into said socket (51) and having an induction coil (521) that is formed with said through hole (520) and that is capable of generating high-frequency wavers through an electromagnetic effect.

6. The compound machine tool of Claim 5, characterized inthat said socket (51) is formed with a pair of insertion holes (511), said heating member (52) further including a pair of inserting pins (522) that are insertable into said insertion holes (511), respectively.

7. The compound machine tool of Claim 5, further **characterized by** a replacement unit (6) that includes a rail frame (61) extending along the X-axis, a pressure cylinder unit (62) slidable on said rail frame (61), a clamping arm unit (63), and a tool receptacle (64) for accommodating a plurality of said heating members (52), said pressure cylinder unit (62) having a piston rod (621) that is telescopicallymovable along the Z-axis and that form a linkwith said clamping arm unit (63), said clamping arm unit (63) being movable along said rail frame (61) relative to the tailstock unit (3) and that is driven by said pressure cylinder unit (62) to move between a first position, where said clamping arm unit (63) clamps a selected one of said induction heating members (52), and a second position, where said clamping arm unit (63) releases said selected induction heating member (52).

8. The compound machine tool of Claim 7, **characterized in that** said clamping arm unit (63) includes a pair of spaced-apart clamping arms (631) that are movable relative to each other so as to adjust a distance therebetween to clamp said selected heating member (52).

9. The compound machine tool of Claim 7, **characterized in that** said tool receptacle (64) includes a case (641) having a top opening, a pair of driving gears (642) rotatably mounted in said case (641), a driven member (643) connected between said driving gears (642), a plurality of sleeves (644) that are connected to an outer surface of said driven member (643) and that form a link with said driven member (643), and a motor (645) for driving one of said driving gears (642), each of said sleeves (644) receiving a respective one of said heating members (52).

## Patentansprüche

1. Kombiniertes Maschinenwerkzeug zur Bearbeitung eines Werkstücks (7), umfassend:
einer Basisaufnahme (1);
eine Klemmvorrichtung (2), die an der Basisaufnahme (1) montiert ist und die ein Futter (21) zum Klemmen eines ersten Endabschnitts des Werkstücks (7) umfasst;
eine Reitstockvorrichtung (3), umfassend einen Reitstock (31), gleitbar auf der Basisaufnahme (1) entlang einer X-Achse und in einem Abstand von dem Futter (21), eine Drehaufnahme (32), drehend angeordnet auf dem Reitstock (31) und drehbar um eine Y-Achse, die senkrecht zu der X-Achse ist, und eine Anstoßanordnung (33) und eine Klemmanordnung (34), die auf der Drehaufnahme (32) montiert sind;
einer Wellenvorrichtung (4), die auf der Basisaufnahme (1) gleitbar ist und die eine Welle (42) und ein mit der Welle (42) verbundenes Bearbeitungselement (8) umfasst; und
**dadurch gekennzeichnet, dass** es ferner umfasst:
eine Heizvorrichtung (5), umfassend ein Heizelement (52), angeordnet auf der Drehaufnahme (32) und in einem Winkelabstand von der Anstoßanordnung (33)
und der Klemmanordnung (34) in Bezug auf die Y-Achse, wobei eines, das Heizelement (52), die Anstoßanordnung (31) oder die Klemmanordnung (34) mit der Drehaufnahme (32) drehbar ist, um mit dem Werkstück (7) ausgerichtet zu werden.

2. Kombiniertes Maschinenwerkzeug nach Anspruch 1, **dadurch gekennzeichnet, dass** das Bearbeitungselement (8) ausgewählt ist aus einem Fräswerkzeug, einem Drehwerkzeug und einem Schleifrad.

3. Kombiniertes Maschinenwerkzeug nach Anspruch 1, **dadurch gekennzeichnet, dass** die Klemmvorrichtung (2) ein Paar Klemmen (341) umfasst, die zueinander beweglich sind, um einen Abstand zwischen ihnen entlang der Y-Achse zum Klemmen des Werkstücks (7) einzustellen, und die Anstoßanordnung (31) ein Anstoßelement (331) umfasst, um gegen einen zweiten Endabschnitt des Werkstücks (7) entlang der X-Achse anzustoßen und diesen zu halten.

4. Kombiniertes Maschinenwerkzeug nach Anspruch 1, **dadurch gekennzeichnet, dass** das Heizelement (52) eine Durchgangsbohrung (520) definiert, um das Werkstück (7) durch diese hindurch zu verlängern.

5. Kombiniertes Maschinenwerkzeug nach Anspruch 4, **dadurch gekennzeichnet, dass** die Heizvorrichtung (5) ferner einen an die Drehaufnahme (32) gekoppelten Sockel (51) umfasst, wobei das Heizelement (52) in den Sockel (51) eingesetzt werden kann und eine Induktionsspule (521) hat, die mit der Durchgangsbohrung (520) geformt ist und die in der Lage ist, Hochfrequenzwellen durch eine elektromagnetische Wirkung zu erzeugen.

6. Kombiniertes Maschinenwerkzeug nach Anspruch 5, **dadurch gekennzeichnet, dass** der Sockel (51) mit einem Paar Einsetzöffnungen (511) geformt ist, wobei das Heizelement (52) ferner ein Paar Einsetzstifte (522) umfasst, die jeweils in die Einsetzöffnungen (511) eingesetzt werden können.

7. Kombiniertes Maschinenwerkzeug nach Anspruch 5, ferner **gekennzeichnet durch** eine Austauschvorrichtung (6), umfassend ein entlang der X-Achse verlaufendes Schienengestell (61), eine auf dem Schienengestell (61) gleitbare Druckzylindervorrichtung (62), eine Klemmarmvorrichtung (63) und eine Werkzeugaufnahme (64) zum Aufnehmen von mehreren der Heizelemente (52), wobei die Druckzylindervorrichtung (62) eine Kolbenstange (621) hat, die teleskopisch entlang der Z-Achse beweglich ist und die eine Verbindung mit der Klemmarmvorrichtung (63) bildet, wobei die Klemmarmvorrichtung (63) entlang des Schienengestells (61) relativ zu der Reitstockvorrichtung (3) beweglich ist, und **durch** die Druckzylindervorrichtung (62) angetrieben wird, um sich zwischen einer ersten Position, wo die Klemmarmvorrichtung (63) ein ausgewähltes der Induktionsheizelemente (52) klemmt, und einer zweiten Position, wo die Klemmarmvorrichtung (63) das ausgewählte Induktionsheizelement (52) freigibt, zu bewegen.

8. Kombiniertes Maschinenwerkzeug nach Anspruch 7, **dadurch gekennzeichnet, dass** die Klemmarmvorrichtung (63) ein Paar voneinander entfernt angeordnete Klemmarme (631) umfasst, die zueinander beweglich sind, um einen Abstand zwischen ihnen zum Klemmen des ausgewählten Heizelements (52) einzustellen.

9. Kombiniertes Maschinenwerkzeug nach Anspruch 7, **dadurch gekennzeichnet, dass** die Werkzeugaufnahme (64) ein Gehäuse (641) mit einer oberen Öffnung, ein Paar drehbar in dem Gehäuse (641) angeordneter Antriebszahnräder (642), ein zwischen den Antriebszahnrädern (642) verbundenes Antriebselement (643), mehrere Muffen (644), die mit einer Außenfläche des Antriebselements (643) verbunden sind und eine Verbindung mit dem Antriebselement (643) bilden, und einen Motor (645) zum Antreiben eines der Antriebsräder (642) umfasst, wobei jede der Muffen (644) ein entsprechendes der Heizelemente (52) aufnimmt.

## Revendications

1. Machine-outil combinée pour usiner une pièce (7), comportant :
un banc (1) ;
un système de serrage (2) monté sur ledit banc (1) et comprenant un mandrin (21) pour serrer une partie formant première extrémité de la pièce à usiner ; (7)
un système de contrepointe (3), comprenant une contrepointe (31) apte à coulisser sur ledit banc (1) sur un axe X et espacée par rapport audit mandrin (21), un support rotatif (32) disposé sur ladite contrepointe (31) de manière à pouvoir tourner et pouvant tourner autour d'un axe Y perpendiculaire à l'axe X, et un dispositif de mise en butée (33) et un dispositif de serrage (34) qui sont montés sur ledit support rotatif (32) ;
un système d'arbre (4) qui peut coulisser sur ledit banc (1) et qui comprend un arbre (42) et un outil de coupe (8) assujetti audit arbre (42) ; et
**caractérisé en ce qu'**elle comporte en outre
un système de chauffage (5) qui comprend un élément chauffant (52) disposé sur ledit banc (32) et espacé angulairement par rapport audit dispositif de mise en butée (33) et audit dispositif de serrage (34), en référence à l'axe Y, l'un desdits élément chauffant (52), dispositif de mise en butée (31) et dispositif de serrage (34) pouvnt tourner avec ledit support rotatif (32) pour être aligné avec la pièce à usiner (7).

2. Machine-outil combinée selon la revendication 1, **caractérisée en ce que** ledit outil de coupe (8) est choisi parmi une fraise, un outil de tournage et une meule de rectification.

3. Machine-outil combinée selon la revendication 1, **caractérisée en ce que** ledit système de serrage (2) comprend une paire de mors (341) mobiles l'un par rapport à l'autre afin de régler une distance entre eux sur l'axe Y pour serrer la pièce à usiner (7), et ledit dispositif de mise en butée (31) comprend un élément de mise en butée (331) pour mettre en butée contre et retenir sur l'axe X une partie formant seconde extrémité de la pièce à usiner (7).

4. Machine-outil combinée selon la revendication 1, **caractérisée en ce que** ledit élément chauffant (52) définit un trou traversant (520) permettant à la pièce à usiner (7) de s'étendre à travers celui-ci.

5. Machine-outil combinée selon la revendication 4, **caractérisée en ce que** ledit système de chauffage (5) comprend en outre une prise femelle (51) montée sur ledit support rotatif (32), ledit élément chauffant (52) étant insérable dans ladite prise femelle (51) et ayant une bobine inductrice (521) dotée dudit trou traversant (520) et apte à générer, par effet électromagnétique, des ondes à haute fréquence.

6. Machine-outil combinée selon la revendication 5, **caractérisée en ce que** ladite prise femelle (51) est pourvue d'une paire de trous d'insertion (511), ledit élément chauffant (52) comprenant en outre une paire de broches d'insertion (522) respectivement insérables dans lesdits trous d'insertion (511).

7. Machine-outil combinée selon la revendication 5, **caractérisée en outre par** un système de remplacement (6) qui comprend un châssis (61) à glissières s'étendant sur l'axe X, un système de vérin de compression (62) pouvant coulisser sur ledit châssis (61) à glissières, un système de bras de serrage (63) et un porte-outils (64) destiné à loger une pluralité desdits éléments chauffants (52), ledit système de vérin de compression (62) ayant une tige (621) de piston qui est mobile d'une manière télescopique sur l'axe Z et qui coopère avec ledit système de bras de serrage (63), ledit système de bras de serrage (63) étant mobile sur ledit châssis (61) à glissières par rapport au système de contrepointe (3) et qui est entraînée par ledit système de vérin de compression (62) pour se déplacer entre une première position, dans laquelle ledit système de bras de serrage (63) serre l'un, choisi, desdits éléments chauffants à induction (52), et une seconde position, dans laquelle ledit système de bras de serrage (63) libère ledit élément chauffant à induction (52).

8. Machine-outil combinée selon la revendication 7, **caractérisée en ce que** ledit système de bras de serrage (63) comprend une paire de bras de serrage (631) espacés l'un de l'autre qui sont mobiles l'un par rapport à l'autre afin de régler une distance entre eux pour serrer ledit élément chauffant choisi (52).

9. Machine-outil combinée selon la revendication 7, **caractérisée en ce que** ledit porte-outils (64) comprend un carter (641) ouvert dans le haut, une paire de pignons d'attaque (642) montés dans ledit carter (641) de manière à pouvoir tourner, un élément mené (643) monté entre lesdits pignons d'attaque (642), une pluralité de fourreaux (644) en prise avec une surface extérieure dudit élément mené (643) et coopérant avec ledit élément mené (643), et un moteur électrique (645) pour entraîner l'un desdits pignons d'attaque (642), chacun desdits fourreaux (644) recevant l'un, respectif, desdits éléments chauffants (52).
